(19) **Europäisches Patentamt / European Patent Office / Office européen des brevets**

(11) **EP 1 876 019 B1**

(12) **EUROPEAN PATENT SPECIFICATION**

(45) Date of publication and mention
of the grant of the patent:
**16.01.2013 Bulletin 2013/03**

(51) Int Cl.:
*B32B 27/36* (2006.01)    *B29C 61/06* (2006.01)
*G09F 3/04* (2006.01)    *B29K 67/00* (2006.01)
*B29K 105/02* (2006.01)    *B29L 9/00* (2006.01)

(21) Application number: **06731261.1**

(22) Date of filing: **06.04.2006**

(86) International application number:
**PCT/JP2006/307313**

(87) International publication number:
**WO 2006/109662 (19.10.2006 Gazette 2006/42)**

(54) **HEAT-SHRINKABLE POLYESTER FILM AND HEAT-SHRINKABLE LABELS**

HEISSSCHRUMPFBARE POLYESTERFOLIE UND HEISSSCHRUMPFBARE ETIKETTEN

FILM POLYESTER RETRECISSANT A LA CHALEUR

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **08.04.2005 JP 2005112176
21.06.2005 JP 2005180623**

(43) Date of publication of application:
**09.01.2008 Bulletin 2008/02**

(73) Proprietor: **Toyobo Co., Ltd.
Osaka-shi
Osaka 530-8230 (JP)**

(72) Inventors:
• **FUJII, Shingo,
TOYOBOSEKI KABUSHIKI KAISHA
Inuyama-shi Aichi 4848508 (JP)**

• **TABOTA, Norimi,
TOYOBOSEKI KABUSHIKI KAISHA
Inuyama-shi Aichi 4848508 (JP)**
• **ODA, Naonobu,
TOYOBOSEKI KABUSHIKI KAISHA
Inuyama-shi Aichi 4848508 (JP)**

(74) Representative: **von Kreisler Selting Werner
Deichmannhaus am Dom
Bahnhofsvorplatz 1
50667 Köln (DE)**

(56) References cited:
**EP-A- 1 184 167      JP-A- 10 244 646
JP-A- 2000 141 573   JP-A- 2001 106 232
JP-A- 2001 122 988   JP-A- 2003 080 653
JP-A- 2004 168 039   JP-A- 2004 196 918**

**Description**

TECHNICAL FIELD

The present invention relates to heat-shrinkable polyester film corresponding to environmental problems and effective utilization of resources in good way to recycling PET bottle.

BACKGROUND ART

As heat-shrinkable films for trunk labels of PET bottle containers and cap seals of glass containers, polystyrene and polyester films have been mainly used. Heat-shrinkable polystyrene films are cheap and relatively easy in shrinkage treatment compared with heat-shrinkable polyester films, thus used mainly as a general type. On the other hand, heat-shrinkable polyester films are mainly used in an application required for high quality from their features of excellent heat resistance, good film luster and high tightening stress after shrinkage.

On the other hand, from the viewpoints of environmental problems and effective utilization of resources, movements of recycling polyester recycled materials such as PET bottle are active, and a heat-shrinkable polyester film is one of utilizable applications thereof. For example, Patent Document 1 describes an invention for a heat-shrinkable film material consisting of a resin derived from a polyethylene terephthalate container and an amorphous polyester resin.

However, polyethylene terephthalate recycled materials made of PET bottles are mixture of various containers, and sands or the like adhered in distributing and recycling processes are mixed therein in addition to heterogeneous polymers of labels and caps. In films using such recycled materials, there are problems that protrusions due to cores generated from the above-described materials mixed in are formed and defect of printing omission takes place. Since there are also large variations of physical properties such as monomer composition and crystallinity degree, it is impossible to obtain a product with a stable quality in producing a heat-shrinkable film of a single layer structure. Further, it is expected that film strength lacks due to the lowering of a molecular weight in a recycling process, which poses a problem of breakage in processing such as printing. There is also a problem that a heat-shrinkable polyester film using a large amount of polyethylene terephthalate material including a recycled material cannot be bonded with tetrahydrofuran of a common solvent.

Patent Document 1: Japanese Unexamined Patent Publication No. 2004-196918

EP-A-1184167 discloses a layered heat-shrinkable film comprising at least three layers as being suitable for bottle applications. It further discloses examples of diol components such as propanediol, butanediol, neopentylglycol and hexandiol as recommendable diol components for the polyester film from the aspects of controlling the glass transition and providing excellent shrinkage finish.

JP-A-2004/196918 discloses a blend of virgin polyethylene-terephthalate and recycled PET in a ratio of between 10/90 to 93/7. Said blend is used in shrinkable films for labeling applications. A multilayer film is also disclosed, It teaches that the polyester type heat-shrinkable film obtained by mixing and heating a PET bottle recycled material and an amorphous polyester resin, wherein the film may be a multilayered film comprising a layer consisting of a material containing the recycled material and another polyester type resin composition.

JP-A-2000-141573 relates to a biaxially-oriented polyester film. It is disclosed that a special, simultaneous biaxial stretching machine is preferably used, since elongation in one-side and in-place direction heat-shrinkage rate variation can be reduced.

JP-A-2003-080653 relates to multilayered plastic molding in which a recycled polyester resin is used as a raw material. The problem to be solved by this disclosure is improving shock resistance of the molding.

JP-A-2004-168039 discloses a preform and a biaxially-oriented container obtained from said perform by stretching it. The problem to be solved by this invention is to prevent a polyester resin from thermal decomposition.

DISCLOSURE OF THE INVENTION

PROBLEMS TO BE SOLVED BY THE INVENTION

The present invention provides firstly a heat-shrinkable polyester film which little causes printing omission in spite of being produced by using a recycled material such as PET bottles, and secondly a heat-shrinkable polyester film which satisfies the requirements of application of PET Bottle Recycling Recommendation Mark as well as which causes no breakage in processing such as printing in spite of being produced by using a recycled material such as PET bottles and can be bonded with tetrahydrofuran.

MEANS TO SOLVE THE PROBLEMS

The present invention relates to a heat-shrinkable polyester film containing 25% by weight or more of a bottle-recycled material in the film, wherein the film has a multilayer structure of at least 2 layers including the layer containing the PET bottle-recycled material of 45 to 80% by weight (A layer) and another layer (B layer), wherein the B layer contains polyethylene terephthalate as a major constitutional component and a largest sub constitutional component consisting of neopentyl glycol and/or 1,4-cyclohexanedimethanol as a polyvalent alcohol component, and the content of the largest sub constitutional component in the B layer is 20 mole % or more; wherein when the film is immersed in hot water at 80°C for 10 seconds and withdrawn, a heat shrinkage in the main-shrinkage direction is 30% or more and a heat shrinkage in the direction orthogonal to the main-shrinkage direction is 10% or less, and when a tensile test after storing the film under an atmosphere at a temperature of 30°C, at a relative humidity of 85% for 28 days, is conducted in the direction orthogonal to the main-shrinkage direction, a ratio of the number of test pieces broken at an elongation rate of 5% or less to the total number of the test pieces is 25% or less. Preferred embodiments of the invention are apparent from the dependent claims.

EFFECT OF THE INVENTION

The heat-shrinkable polyester film of the present invention has a good printability and mechanical strength in spite of using a PET bottle-recycled material, and can be bonded with common solvents, satisfies the requirements of application of PET Bottle Recycling Recommendation Mark, and is useful from the viewpoints of environmental problems and effective utilization of resources.

The heat-shrinkable polyester film according to the present invention of the present application contains 25% by weight or more of a PET bottle-recycled material in the film, preferable 25 to 45% by weight. The major constitutional component constituting the film is ethylene terephthalate and at least one kind of sub constitutional component is contained, any one of neopentyl glycol or 1,4-cyclohexanedimethanol is contained as the largest sub constitutional component. The film of the invention is a heat-shrinkable polyester film having a multilayer structure of at least 2 layers including a layer containing 45 to 80% by weight of a PET bottle-recycled material (A layer) and other layer (B layer), wherein the B layer contains polyethylene terephthalate as a major constitutional component and a sub constitutional component consisting of at least one kind including a polyvalent carboxylic acid component and/or a polyvalent alcohol component, when the total amount of the polyvalent carboxylic acid component is 100 mole % and the total amount of the polyvalent alcohol component is 100 mole %, the content of the polyvalent carboxylic acid component or the polyvalent alcohol component constituting the largest sub constitutional component in the B layer is 20 mole % or more. The film ensures mechanical strength of a practical use level by increasing the additive rate of polyethylene terephthalate in a substrate layer in spite of using a recycled material having a low limiting viscosity, and the film ensures a shrinkage ratio necessary for a shrinkable label and is allowed to bond with tetrahydrofuran of a common solvent by containing a sub constitutional component to become amorphous in front-back layers. Additionally, "solvent-bondable" in the present invention means that solvent-bonding strength is 3 N/15 mm or more by an evaluation method in Example described later.

The content of the PET bottle-recycled material in the heat-shrinkable polyester film according to the invention of the present application is 25% by weight or more, preferably 25 to 45% by weight. The heat-shrinkable polyester film containing less that 25% by weight of the PET bottle-recycled material does not satisfy the requirements of application of PET bottle Recycling Recommendation Mark approved by the Council for PET Bottle Recycling, recycle efficiency of a PET bottle is low, improvement is desired from the viewpoints of environmental problems and effective utilization of resources. On the other hand, when the content of the PET bottle-recycled material in the heat-shrinkable polyester film exceeds 45% by weight, it is not preferable because the necessary shrinkage ratio may not be obtained sufficiently.

In the invention of the present application, the embodiment is a heat-shrinkable polyester film having a multilayer structure of at least 2 layers including a layer containing 45% by weight or more of a PET bottle-recycled material (A layer) and other layer (B layer), wherein an additive rate of the PET bottle-recycled material into the A layer is preferably 45% by weight or more and 80% by weight or less. When this additive rate is 25% by weight or more and less than 45% by weight, mechanical strength may not be obtained sufficiently, and therefore a problem tends to occur that the films are broken in processing such as printing. When the additive rate is less than 25% by weight, recycle efficiency of a PET bottle is low, improvement is desired from the viewpoints of environmental problems and effective utilization of resources. On the other hand, when the additive rate is more than 80% by weight, necessary shrinkage ratio is not obtained sufficiently. The additive rate of the PET bottle-recycled material into the A layer is more preferably 45% by weight or more and 70% by weight or less, further preferably 50% by weight or more and 65% by weight or less.

The lamination constitution when the present invention is a multilayer structure can adopt any constitutions such as 2-kind 2-layer constitution of A/B, 2-kind-3 layer constitution of B/A/B, 2-kind 4 or more-layer constitution, and by adding a third layer, 3-kind 3 or more-layer constitution such as B/C/A/C/B and C/B/A/B/C, particularly from the reason for stabilizing a solvent-bondability with tetrahydrofuran, 2-kind 3-layer constitution of B/A/B is preferred. A C layer of the third layer may be an intermediate composition of an A layer and a B layer, or may be a layer containing a coloring agent or an ultraviolet absorber. Further, when the C layer used in an outermost layer, it may be a layer free from a recycled material because of a concern of containing the contamination that is a problem in a recycled material. Additionally in the case of a multilayer structure, the additive amount of a PET bottle-recycled material to the whole film can be adjusted by the additive amount of the PET bottle-recycled material in each layer and each layer ratio. Regarding a preferable layer ratio, for example in 2-kind 3-layer constitution of B/A/B, a preferable layer ratio of the A layer to the B layer is 30:70 to 70:30.

In the above-described 2-kind 3-layer constitution of B/A/B, it is preferable that an amorphous component is incorporated into the front-back layer (B layer) so as to ensure shrinkage ratio necessary for a shrinkable label and ensure bonding with tetrahydrofuran of a common solvent, and the content of the largest sub constitutional component (amorphous component) is preferably 20% or more. As the amorphous component described herein, a neopentyl glycol component and/or 1, 4-cyclohexanedimethanol are preferable. As a specific example, an amorphous component using a copolymer containing polyethylene terephthalate and, neopentyl glycol and/or 1,4-cyclohexanedimethanol as a main constituent is exemplified, the copolymerization ratio is preferably 20 to 40 mole%. When the copolymerization ratio is less than 20 mole%, bonding with tetrahydrofuran becomes difficult, and necessary shrinkage ratio is not obtained either. On the other hand, when the copolymerization ratio is more than 40 mole%, the degree of polymerization hardly increases and production efficacy is deteriorated because a drying temperature can not be raised since pellets adhere each other in preliminary drying before film forming. The additive amount of the copolymer into the B layer is preferably 65% by weight or more. Additionally, the additive amount of PET bottle-recycled material into the B layer is preferably 35% or less, and more preferably 20% or less.

The heat-shrinkable polyester film of the present invention has a heat shrinkage in the main-shrinkage direction of 30% or more in hot water at 80°C. This is because that regarding a film where this heat shrinkage is less than 30%, when it is covered on a container like bottle as a label and shrunk, a part not attached closely on the container arises, resulting in defect. The heat shrinkage in the main-shrinkage direction is more preferably 40% or more, and further preferably 50% or more.

Further, a heat shrinkage in the direction orthogonal to the main-shrinkage direction is 10% or less. This is because that regarding a film where this heat shrinkage is more than 10%, when it is covered on a container and shrunk, uneven shrinkage in the direction orthogonal to the maximum shrinkage direction of a label is large, thereby not only appearance is bad, but also position of a label is not stabilized. The heat shrinkage in the direction orthogonal to the main-shrinkage direction is preferably 8% or less, and further preferably 6% or less.

In the present invention, the PET bottle-recycled material means a recycled material of a polyethylene terephthalate container such as a PET bottle, there are a material recycled material and a chemical recycled material, and both of them can be used. It may use only one of them or mix them.

A limiting viscosity of the film in the present invention is preferably 0.61 dl/g or more. This is because that by setting the limiting viscosity of the film to be 0.61 dl/g or more, the mechanical strength and breaking resistance of the film are improved, the defects of breaking, etc., in the printing process and solvent-bonding process is reduced. In order to set the limiting viscosity of the film to be 0.61 dl/g or more, for example, it can be accomplished by using a raw material of a high molecular weight as polyester used. In the present invention, there is a case where the limiting viscosity differs between a substrate layer and a printing layer, however, it is employed if the limiting viscosity of the film is 0.61 dl/g or more as the whole film. Additionally, the more preferable limiting viscosity of the film is 0.63 dl/g or more.

Additionally, in the invention of the present application, regarding a mechanical strength, after a film is stored under an atmosphere at a temperature of 30°C, at a relative humidity of 85% for 28 days, the tensile test is conducted in the direction orthogonal to the main-shrinkage direction, a ratio of the number of test pieces broken at an elongation rate of 5% or less to the total number of test pieces (initial breaking ratio) is preferably 70% or less, more preferably 25% or less, and in the second invention of the present application, it is 25% or less. By setting the initial breaking ratio within a predetermined range, good processability is ensured even after a prolonged storage of film. To control the initial breaking ratio within a predetermined range, it is preferable to employ a film-forming method described later in addition to control the mixing amount of the PET bottle-recycled material described above, lamination constitution and limiting viscosity of the film.

The heat-shrinkable polyester film of the present invention has an ester unit consisting of a polyvalent carbolic acid component and a polyvalent alcohol component as a major constitutional unit. From the considerations of breaking resistance, strength and heat resistance etc., it is preferable that an ethylene terephthalate unit is chosen to be 50 mole% or more in 100 mole% of units of the heat-shrinkable polyester film. Therefore, it is preferable that a terephthalic acid component (terephthalic acid or an ester component thereof) is 50 mole% or more in 100 mole% of polyvalent carbolic acid components, and an ethylene glycol component is 50 mole% or more in 100 mole% of polyvalent alcohol components. The ethylene terephthalate unit is more preferably 55 mole% or more, and further preferably 60 mole% or more.

As polyvalent alcohols forming a polyvalent alcohol component in an ester unit, in addition to the above-described ethylene glycol and neopentyl glycol, there can be concomitantly employed aliphatic diols such as 1,3-propanediol, triethylene glycol, 1,4-butandiol, 1,6-hexanediol, 3-methyl-1,5-pentanediol, 2-methyl-1,5-pentanediol, 2,2-diethyl-1,3-propanediol, 1-9-nonanediol and 1,10-decanediol; trimethylolpropane, glycerin, pentaerythritol, diethylene glycol, dimerdiol, polyoxytetramethylene glycol, and bisphenol compound or alkylene oxide adducts of derivatives thereof.

Further, as polyvalent carbolic acids forming a polyvalent carbolic acid component, in addition to the above-described terephthalic acid and the esters, aromatic dicarboxylic acids and ester-forming derivatives thereof, aliphatic dicarboxylic acids, and the like can be employed. As the aromatic dicarboxylic acids, for example, isophthalic acid, naphthalene-1,4- or -2,6-dicarboxylic acid, and 5-sodiumsulfoisophthalic acid are exemplified. Further, as the ester derivatives of these aromatic dicarboxylic acids and terephthalic acid, derivatives such as dialkyl ester and diaryl ester are exemplified. As the aliphatic dicarboxylic acids, there are exemplified gultaric acid, adipic acid, sebacic acid, azelaic acid, citric acid, succinic acid, and aliphatic dicarboxylic acids ordinarily called dimer acids. Further, according to need, there can be concomitantly employed oxycarboxylic acids such as p-oxybenzoic acid, polyvalent carboxylic acids such as trimellitic anhydride and pyromellitic anhydride.

In addition thereto, lactones represented by ε-caprolactone may be partly employed although they are not a polyvalent alcohol nor a polyvalent carboxylic acid. Lactones become a unit having ester bonds at both terminals by ring-opening, it can be thought that a unit derived from lactones is a carboxylic acid component and an alcohol component. Thus, in the case of using lactones, the amount of the 1,4-cyclohexanedimethanol component or the amount of the other polyvalent alcohol component is calculated in such a way that the amount of the unit amount derived from lactones added to the amount of the polyvalent alcohol component is considered as 100 mole%. Further, in calculating the amount of each polyvalent carboxylic acid component, the amount of the unit amount derived from lactones added to the amount of the polyvalent carboxylic acid component is considered as 100 mole%.

As a preferable component constituting units other than an ethylene terephthalate unit, preferable is one which lowers high crystallizability by an ethylene terephthalate unit and can ensure a low-temperature heat shrinking property and solvent-bondability. As such crystallizability-lowering components, there are preferably exemplified isophthalic acid, naphthalene-1,4- or -2,6-dicarboxylic acid for polyvalent carboxylic acid components; and neopentyl glycol, 1,4-cyclohexanedimethanol, 1-4-butanediol and 1,3-propanediol for polyvalent alcohol components. By the concomitant use of these crystallizability-lowering components, a heat shrinkage property, breaking resistance and solvent-bondability can be improved in balanced manner. In particular, from the viewpoint of solvent-bondability, it is desired that for at least a layer constituting a surface layer, a polyester containing units constituted by at least one kind of these preferable components is used as a part of raw materials. In 100 mole% of units of polyester as a raw material, the unit containing these crystallizability-lowering components is preferably 10 mole% or more, more preferably 12 mole% or more, and further preferably 15 mole% or more. When the total amount of the polyvalent carboxylic acid components is 100 mole% and the total amount of the polyvalent alcohol components is 100 mole%, a particularly preferred embodiment is that neopentyl glycol and/or 1,4-cyclohexanedimethanol is contained in 10 to 30 mole% and 1,4-butanediol and/or 1,3-propanediol is contained in 5 to 30 mole%.

Polyesters constituting heat-shrinkable polyester films is produced by an ordinary method of melt polymerization, besides, there are exemplified a so-called direct polymerization method where oligomers obtained by directly reacting dicarboxylic acids with glycols are polymerized; and a so-called ester-exchange method where after dimethyl ester of dicarboxylic acid and glycol are subjected to ester-exchange reaction, polymerization thereof is conducted, and an arbitrary polymerization method can be employed. Further, polyester obtained by other polymerization method may also be employed. As a polymerization catalyst, various common catalysts can be used, for example, such as titanium based catalysts (titanium tetrabutoxide, etc.,), antimony based catalysts (antimony trioxide, etc.,), germanium based catalysts (germanium dioxide etc), and cobalt based catalysts (cobalt acetate, etc.,) are exemplified.

Further, to improve a slipping property of a heat-shrinkable film, for example, there may be added inorganic lubricants such as titanium dioxide, particulate silica, kaolin and calcium carbonate; and for example, organic lubricants such as ester of long-chain aliphatic acid. Moreover, according to need, there may be added additives such as a stabilizer, coloring agent, antioxidant, antistatic agent and ultraviolet absorber.

In order to produce the heat-shrinkable polyester film of the present invention, the following methods are preferred. First, a chip-like PET bottle-recycled material and other polyester material are prepared, and they are dried using a drying machine such as a hopper dryer and paddle dryer, or a vacuum dryer. Thereafter, they are suitably mixed, and extruded from an extruder at a temperature of 200 to 300°C into a film. Alternatively, undried chips are extruded similarly into a film while removing water from them in a bent-type extruder. As for a lamination film having a multilayer structure, coextrusion method may be employed. PET bottle-recycled materials may be used as chips which have been washed and crashed by known methods.

In extruding, any conventional method such as a T-die method or tubular method may be employed. An undrawn film is obtained by rapid cooling with a casting roll after extrusion. Additionally, "undrawn film" includes a film where a tension is applied for conveying the film in a production process. It is preferable from the viewpoints of suppressing the unevenness of the film thickness that by disposing an electrode between the above-described extruder and casting roll and applying a voltage between the electrode and casting roll, a film is electrostatically contacted on the roll closely.

The above-described undrawn film is subjected to a drawing treatment. The drawing treatment may be continuously conducted after cooling by the above-described casting roll, or after cooling, may be conducted after winding the undrawn film into a roll shape. Additionally, it is practical in production efficiency that the maximum shrinkage direction is a traverse (width) direction of the film, thus, hereinafter, an example of the drawing method are shown in the case where the maximum shrinkage direction is a traverse direction. In the case where the maximum shrinkage direction is a machine (longitudinal) direction of the film, drawing can be done in accordance with an ordinary operation by means of changing the drawing direction of the following method by 90°.

In drawing the heat-shrinkable polyester film in a traverse direction using a tenter, before drawing process, the film is heated up to a film surface temperature in a range of Tg+0°C to Tg+60°C, and drawn at a predetermined temperature in a range of Tg-20°C to Tg+40°C by 2.3 to 7.3 times, preferably 2.5 to 6.0 times. Thereafter, the film is heat-treated at a predetermined temperature in a range of 50°C to 110°C while drawing by 0 to 15% or relaxing by 0 to 15%, according to need, further heat-treated at a predetermined temperature in a range of 40°C to 100°C to give a heat-shrinkable polyester film.

The film may also be drawn 1.0 to 4.0 times, preferably 1.1 to 2.0 times in the longitudinal direction, as well as in the traverse direction by the tenter. In this way, the film may be biaxial drawn, either by sequential or simultaneous biaxial drawing, and the film may be further redrawn if desired. In the sequential biaxial drawing, the film may be drawn in any of the orders of direction, from longitudinal to traverse, from traverse to longitudinal, from longitudinal, traverse and to longitudinal, and from traverse, longitudinal to traverse and so on.

The thickness of the heat-shrinkable polyester film of the present invention is not particularly limited, for example, as a heat-shrinkable polyester film for label, it is recommended that the whole thickness is 20 $\mu$m or more, preferably 25 $\mu$m or more, and 300 $\mu$m or less, preferably 200 $\mu$m or less.

To produce a heat-shrinkable label from the above-described heat-shrinkable polyester film, using the known tubular molding equipment, a solvent for bonding is applied to a little inside from the edge of one surface at one side of the film in a line with a predetermined width, the film is immediately folded to laminate edge parts for bonding, thereby to obtain a tube. This tube is cut to a predetermined length to give a heat-shrinkable label of the present invention.

For bonding the film, it may be possible to employ a melt-bonding method by melting a part of the film, but, from the point of suppressing the variations of heat shrinkage properties of the label, it is preferable to conduct employing a solvent. As the usable solvent, for example, there are exemplified organic solvents including aromatic hydrocarbons such as benzene, toluene, xylene and trimethylbenzene; halogenated hydrocarbons such as methylene chloride and chloroform; phenols such phenol; furans such as tetrahydrofuran; oxolanes such as 1,3-dioxolane, above all, 1,3-dioxolane and tetrahydrofuran are preferred from the point of excellence in safety. This heat shrinkable label is wrapped around a container like PET bottle, then, heat shrunk by the known heat shrinking means (hot-air tunnel or steam tunnel) to cover the container.

EXAMPLES

Hereinafter, the present invention will be described in detail in reference to EXAMPLES. Physical properties of films obtained in EXAMPLES and COMPARATIVE EXAMPLES were determined according to the following procedures.

(1) Heat shrinkage

A film was cut into 10 cm×10 cm square, immersed in hot water at 80°C±0.5°C under no load for 10 seconds to be heat shrunk, then immediately immersed in water at 25°C±0.5°C for 10 seconds, thereafter, the length of a sample was measured in the longitudinal and traverse directions, and a value was obtained according to the following formula. A direction with the largest shrinkage is defined as the maximum shrinkage direction. Heat shrinkage (%) = (Length before shrinkage - Length after shrinkage) ÷ (Length before shrinkage) × 100

(2) Printability

Using a PAS-model printing machine manufactured by Higashitani Ironworks Co., Ltd., an ink (Shrink EX Grass green) manufactured by Toyo Ink Mfg Co., Ltd., was printed on a film at a speed of 100 m/min using a gravure roll having 150 lines × 30 $\mu$ × 20%, and the printed surface was amplified by a magnifying glass (15 times), the number of ink pinholes per 1 square centimeter was counted, and evaluated by the following evaluation criteria.

○: 0 to 10
Δ: 11 to 50
x: 51 or more

(3) Mechanical strength

A sample was stored under an atmosphere at 30°Cx relative humidity of 85% for 28 days, then the sample was subjected to a tensile test in a direction orthogonal to the maximum shrinkage direction (test piece width: 15mm, test piece length: 120 mm, distance between chucks: 20 mm, tensile speed: 200 m/min, temperature: 23°C, sample number: 20), the number of the sample pieces broken at an elongation rate of 5% or less was counted to evaluate by the following evaluation criteria. Additionally, the ratio (%) of the number of test pieces broken at an elongation rate of 5% or less to the total number of the test pieces was defined as an initial breaking ratio.
○: 0 to 5 pieces (initial breaking ratio 0 to 25%)
Δ: 6 to 14 pieces (initial breaking ratio 30 to 70%)
✕: 15 to 20 pieces (initial breaking ratio 75 to 100%)

(4) Limiting viscosity

Precise weighing out of 0.1 g of a sample (chip or film), and the sample was dissolved in 25 ml of a mixed solvent (phenol/tetrachloroethane = 3/2 (mass ratio)), and then the measurement was conducted at $30\pm0.1°C$ using an Ostwald viscometer. Limiting viscosity [η] was obtained by the following equation (Huggins equation).
$$[\text{Eq. 1}]$$

$$\eta_{sp}/c = [\eta] + k[\eta]^2 c$$

k is a so-called Huggins constant, and a measure of fluid dynamic interaction between solute molecules.
[η] is obtained by measuring the viscosity of several solutions having different concentrations and plotting $\eta_{sp}/c$ against c, and extrapolating the resulting straight line to c=0.
$\eta_{sp}$ represents specific viscosity at concentration c.

(5) Solvent bondability

On one surface of a film, tetrahydrofuran (THF) was continuously applied in the coating amount of 3 g/m$^2$ and 5 mm width, and immediately films were bonded each other to conduct the bonding process to give a tubular film. After being allowed to stand under an atmosphere at a temperature of 25°C and relative humidity of 65% for 24 hours, the tubular film was cut to 15 mm width in the direction orthogonal to the flow direction of the bonding process to prepare a sample, the bonding part was subjected to a T-type peeling test in the above-described direction in accordance with JIS K 6854.
The number of the test pieces was set to 20, the test was conducted in the conditions of test piece length of 60 mm, distance between chucks of 20 mm, test piece width of 15mm, temperature of 23°C and tensile speed of 200 m/min, it was evaluated by the following criteria.
○: 3N/15 mm or more
✕: less than 3N/15 mm

Experiment 1, not according to the invention

For a substrate layer, a mixed polyester resin of polyester A: 10% by weight, polyester B: 55% by weight, polyester C: 10% by weight, and polyester D: 25% by weight were used; for front-back outer layers, a mixed polyester resin of polyester A: 35% by weight, polyester B: 55% by weight, and polyester C were used: 10% by weight were used; each of the mixed resins was melted at 270°C by a separate uniaxial extruder, coextruded through a T-die, and cooled by a chill roll to give an undrawn film with a 3-layer structure (thickness: 200 μm). This undrawn film was preheated at 88°C for 10 seconds, then, drawn 3.9 times at 80°C in the traverse direction by a tenter, and subsequently heat treated at 78°C for 10 seconds to obtain a heat-shrinkable polyester film with a thickness of 50 μm (substrate layer: 25 μm/ front-back layers: each 12 μm). The compositions and contents of polyester resins employed are shown in Table 1. In Table 1, TPA represents terephthalic acid, EG represents ethylene glycol, BD represents 1,4-butanediol, NPG represents neopentyl glycol, and CHDM represents 1,4-cyclohexanedimethanol. Further, the characteristics of the obtained film are shown in Table 2.

Experiments 2 to 4, not according to the invention

A heat-shrinkable polyester film with a thickness of 50 μm was obtained in the same method as in Experiment 1 except that the thickness of the front-back layers was changed. The characteristics of the film are shown in Table 2.

Experiment 5, not according to the invention

A heat-shrinkable polyester film with a thickness of 50 μm was obtained in the similar method as in Experiment 1 except that for a substrate layer, a mixed polyester resin of polyester B: 40% by weight, polyester C: 10% by weight, and polyester D: 50% by weight were used; for front-back layers, a mixed polyester resin of polyester A: 35% by weight, polyester B: 55% by weight, and polyester C: 10% by weight were used, and the thickness of the front-back layers were each 4 μm. The characteristics of the film are shown in Table 2.

Experiments 6 to 8

After materials mixed in a raw material composition ratio shown in Table 2 were dried, each of them was melt at 270° C by a separate uniaxial extruder, coextruded through a T-die, and cooled by a chill roll to give an undrawn film with a 3-layer structure (thickness: 160 μm). This undrawn film was preheated at 85°C for 10 seconds, then, drawn 4 times at 80°C in the traverse direction by a tenter, and subsequently heat treated at 78°C for 10 seconds to obtain a heat-shrinkable polyester film with a thickness of 40 μm (substrate layer: 20 μm/front-back layers: each 10 μm). The compositions and contents of polyester resins employed are shown in Table 1. It is found that the heat-shrinkable polyester films produced in Experiments 6 to 8, as shown in Table 3, have sufficient shrinkage ratio and mechanical strength as a heat-shrinkable film, and can be bonded with tetrahydrofuran of a common solvent.

Experiments 9 to 10

A heat-shrinkable polyester film with a thickness of 40 μm was obtained in the similar method as in Experiments 6 to 8 except for employing a raw material composition ratio shown in Table 3. As shown in Table 3, it is found that one that the additive amount of a recycled material is equal in the substrate layer and front-back layer (Experiment 9) is low in mechanical strength, and one that the recycled material is added to the substrate layer at high concentration (Experiment 10) is too low in shrinkage ratio to be sufficient shrinking properties as a shrinkable film.
[Table 1]

|  | Composition (mole %) | | | | | Limiting viscosity (dl/g) |
|---|---|---|---|---|---|---|
|  | Polyvalent carboxylic acids | Polyvalent alcohols | | | | |
|  | TPA | EG | BD | NPG | CHDM | |
| A | 100 | 100 | | | | 0.75 |
| B | 100 | 70 | | 30 | | 0.75 |
| C | 100 | | | | 30 | 0.75 |
| D | 100 | | 100 | | | 1.24 |
| E | "Clear pellet" manufactured by Yono PET Bottle Recycling Co., Ltd. | | | | | 0.63 |

[Table 2]

| | | Experiment 1 | | Experiment 2 | | Experiment 3 | | Experiment 4 | | Experiment 5 | |
|---|---|---|---|---|---|---|---|---|---|---|---|
| | | Substrate layer | Front-back layer | Substrate layer | Front-back layer | Substrate layer | Front-back layer | Substrate layer | Front-back layer | Substrate layer | Front-back layer |
| Material composition (% by weight) | Polyester A | 10 | 35 | 10 | 35 | 10 | 35 | | | | 35 |
| | Polyester B | 55 | 55 | 55 | 55 | 55 | 55 | 55 | | 40 | 55 |
| | Polyester D | 10 | 10 | 10 | 10 | 10 | 10 | 10 | | 10 | 10 |
| | Polyester E | 25 | | 25 | | 25 | | 35 | | 55 | |
| Film Thickness | (μm) | 50 | | 50 | | 50 | | 50 | | 50 | |
| Front-back layer thickness | (μm) | 12+12 | | 6+6 | | 2+2 | | 0 | | 4+4 | |
| Limiting Viscosity | (dl/g) | 0.646 | | 0.624 | | 0.613 | | 0.607 | | 0.592 | |
| Heat Shrinkage (%) | Longitudinal | 3 | | 3 | | 3 | | 4 | | 3 | |
| | Lateral | 45 | | 44 | | 44 | | 42 | | 38 | |
| Printability | - | ○ | | ○ | | Δ | | × | | ○ | |
| Mechanical Property | - | ○ | | ○ | | Δ | | × | | × | |

[Table 3]

| | | Experiment 6 | | | Experiment 7 | | | Experiment 8 | | | Experiment 9 | | | Experiment 10 | | |
|---|---|---|---|---|---|---|---|---|---|---|---|---|---|---|---|---|
| | | Substrate layer | Front-Back layer | Whole film | Substrate layer | Front Back layer | Whole film | Substrate layer | Front Back layer | Whole film | Substrate layer | Front-Back layer | Whole film | Substrate layer | Front-Back layer | Whole film |
| Material composition (% by weight) | A | | | | 20 | 10 | 15 | | | | | | | | | |
| | B | 30 | 90 | G0 | 20 | 80 | 50 | | | | 55 | 55 | 55 | 0 | 90 | 45 |
| | C | | | | | | | 20 | 80 | 50 | | | | | | |
| | D | 10 | 10 | 10 | 10 | 10 | 10 | 10 | 10 | 10 | 10 | 10 | 10 | 10 | 10 | 10 |
| | E | 60 | | 30 | 50 | | 25 | 70 | 10 | 40 | 35 | 35 | 35 | 90 | 0 | 45 |
| Material composition (mole %) | TPA | 100 | 100 | 100 | 100 | 100 | 100 | 100 | 100 | 100 | 100 | 100 | 100 | 100 | 100 | 100 |
| | EG | 81.6 | 63.5 | 72.5 | 84.6 | 66.5 | 75.6 | 84.7 | 67.5 | 76.1 | 74.1 | 74.1 | 74.1 | 90.6 | 63.5 | 77.1 |
| | BD | 9.4 | 9.4 | 9.4 | 9.4 | 9.4 | 9.4 | 9.6 | 9.6 | 9.6 | 9.4 | 9.4 | 9.4 | 9.4 | 9.4 | 9.4 |
| | NPG | 9.0 | 27.1 | 18.1 | 6.0 | 24.1 | 15.0 | | | | 16.5 | 16.5 | 16.5 | | 27.1 | 13.5 |
| | CHDM | | | | | | | 5.7 | 22.9 | 14.3 | | | | | | |
| Recycled material ratio in film | (%) | 30 | | | 25 | | | 40 | | | 35 | | | 45 | | |
| Limiting viscosity | (dl/g) | 0626 | | | 0.632 | | | 0.617 | | | 0.618 | | | 0.603 | | |
| Heat shrinkage (%) | Longitudinal | 3 | | | 0 | | | 2 | | | 0 | | | 5 | | |
| | Lateral | 47 | | | 38 | | | 45 | | | 43 | | | 28 | | |
| Solvent-bondability | - | ○ | | | ○ | | | ○ | | | × | | | ○ | | |
| Mechanical strength | - - | ○ | | | ○ | | | ○ | | | × | | | ○ | | |

EP 1 876 019 B1

Industrial Applicability

The heat-shrinkable polyester film of the present invention has the same quality as the conventional film in spite of using a PET bottle-recycled material, so that it is useful as an earth-friendly heat-shrinkable film for labels.

## Claims

1. A heat-shrinkable polyester film containing 25% by weight or more of a bottle-recycled material in the film, wherein the film has a multilayer structure of at least 2 layers including the layer containing the PET bottle-recycled material of 45 to 80% by weight (A layer) and another layer (B layer), wherein
the B layer contains polyethylene terephthalate as a major constitutional component and a largest sub constitutional component consisting of neopentyl glycol and/or 1,4-cyclohexanedimethanol as a polyvalent alcohol component, and the content of the largest sub constitutional component in the B layer is 20 mole % or more;
wherein when the film is immersed in hot water at 80°C for 10 seconds and withdrawn, a heat shrinkage in the main-shrinkage direction is 30% or more and a heat shrinkage in the direction orthogonal to the main-shrinkage direction is 10% or less, and when a tensile test after storing the film under an atmosphere at a temperature of 30°C, at a relative humidity of 85% for 28 days, is conducted in the direction orthogonal to the main-shrinkage direction, a ratio of the number of test pieces broken at an elongation rate of 5% or less to the total number of the test pieces is 25% or less.

2. The heat-shrinkable polyester film according to claim 1, wherein a major constitutional component constituting the film is ethylene terephthalate, and the content of the PET bottle-recycled material in the film is 25 to 45% by weight.

3. The heat-shrinkable polyester film according to any one of claims 1 or 2, wherein the film is solvent-bondable with tetrahydrofuran.

4. The heat-shrinkable polyester film according to any one of claims 1 to 3, wherein a limiting viscosity of the film is 0.61 dl/g or more.

5. A heat-shrinkable label obtained from the heat-shrinkable polyester film according to any one of claims 1 to 4.

## Patentansprüche

1. Wärmeschrumpfbare Polyesterfolie, die 25 Gew.-% oder mehr eines Flaschenrecyclingmaterials in der Folie enthält, wobei die Folie eine mehrschichtige Struktur aus wenigstens 2 Schichten hat, die die Schicht, welche das PET-Flaschenrecyclingmaterial zu 45 bis 80 Gew.-% enthält (A-Schicht), und eine weitere Schicht (B-Schicht) umfassen, wobei
die B-Schicht Polyethylenterephthalat als Hauptbestandteil und einen größten Nebenbestandteil, der aus Neopentylglycol und/oder 1,4-Cyclohexandimethanol als mehrwertiger Alkoholkomponente besteht, enthält; und der Gehalt des größten Nebenbestandteils in der B-Schicht 20 Mol-% oder mehr beträgt;
wobei die Heißschrumpfung in der Hauptschrumpfungsrichtung 30% oder mehr beträgt und die Heißschrumpfung in der Richtung senkrecht zur Hauptschrumpfungsrichtung 10% oder weniger beträgt, wenn die Folie 10 Sekunden lang in heißes Wasser von 80 °C eingetaucht und dann wieder herausgezogen wird, und wenn eine Zugprüfung in der Richtung senkrecht zur Hauptschrumpfungsrichtung durchgeführt wird, nachdem die Folie 28 Tage lang unter einer Atmosphäre mit einer Temperatur von 30 °C und einer relativen Feuchtigkeit von 85% aufbewahrt wurde, das Verhältnis der Zahl der bei einer Dehnung von 5% oder weniger gerissenen Probekörper zur Gesamtzahl der Probekörper 25% oder weniger beträgt.

2. Wärmeschrumpfbare Polyesterfolie gemäß Anspruch 1, wobei der Hauptbestandteil der Folie Ethylenterephthalat ist und der Gehalt des PET-Flaschenrecyclingmaterials in der Folie 25 bis 45 Gew.-% beträgt.

3. Wärmeschrumpfbare Polyesterfolie gemäß einem der Ansprüche 1 oder 2, wobei die Folie mit Tetrahydrofuran lösungsmittelklebbar ist.

4. Wärmeschrumpfbare Polyesterfolie gemäß einem der Ansprüche 1 bis 3, wobei die Grenzviskositätszahl der Folie 0,61 dl/g oder mehr beträgt.

**5.** Heiß aufschrumpfbares Etikett, das aus der wärmeschrumpfbaren Polyesterfolie gemäß einem der Ansprüche 1 bis 4 erhalten ist.

## Revendications

**1.** Film de polyester rétrécissant à la chaleur contenant 25% en poids, ou plus, d'un matériau pour bouteille recyclé dans le film, dans lequel le film présente une structure multicouche d'au moins 2 couches incluant la couche contenant le matériau PET de bouteille recyclé de 45 à 80% en poids (Couche A) et une autre couche (couche B), dans lequel la couche B contient du polytéréphtalate d'éthylène en tant que composant structural majeur et un composant secondaire structural le plus important constitué de néopentylglycol et/ou de 1,4-cyclohexanediméthanol en tant que composant alcoolique polyvalent, et
la teneur du composant secondaire structural le plus important dans la couche B représente 20 mole % ou plus ;
dans lequel, lorsque le film est immergé dans de l'eau chaude à 80° C pendant 10 secondes et retiré, un rétrécissement à la chaleur dans la direction principale de rétrécissement est de 30% ou plus et le rétrécissement à la chaleur dans la direction orthogonale par rapport à la direction principale de rétrécissement est de 10% ou moins, et lorsqu'un test de traction après le stockage du film dans une atmosphère à une température de 30°C, à une humidité relative de 85% pendant 28 jours, est réalisé dans la direction orthogonale par rapport à la direction principale de rétrécissement, le rapport du nombre de pièces de test brisées au niveau d'un taux d'élongation de 5% ou moins par rapport au nombre total des pièces de test est de 25% ou moins.

**2.** Film de polyester rétrécissant à la chaleur selon la revendication 1, dans lequel un composant structural majeur constituant le film est le téréphtalate d'éthylène, et la teneur en matériau PET de bouteille recyclé dans le film est de 25 à 45 % en poids.

**3.** Film de polyester rétrécissant à la chaleur selon l'une quelconque des revendications 1 ou 2, dans lequel le film peut être collé par solvant avec du tétrahydrofurane.

**4.** Film de polyester rétrécissant à la chaleur selon l'une quelconque des revendications 1 à 3, dans lequel la viscosité limite du film est de 0,61 dl/g ou supérieure.

**5.** Etiquette rétrécissant à la chaleur obtenue à partir du film de polyester rétrécissant à la chaleur selon l'une quelconque des revendications 1 à 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004196918 A
- EP 1184167 A
- JP 2000141573 A
- JP 2003080653 A
- JP 2004168039 A